# EUROPEAN PATENT SPECIFICATION

(11) **EP 0 935 323 B1**
(45) Date of publication and mention of the grant of the patent: **09.09.2009**
(21) Application number: 99200298.0
(22) Date of filing: 03.02.1999
(51) Int. Cl.: H02B 1/056, H02B 1/14

(54) **An adaptor with a protected contact for connecting electrical devices to distribution bars**
Adapter mit einem geschützten Kontakt, zum Verbinden von elektrischen Vorrichtungen mit Sammelschienen
Adaptateur muni d'un contact protégé, pour la connection d'appareils électriques à des barres de distribution

(30) Priority: 05.02.1998 IT MI980213
(43) Date of publication of application: 11.08.1999
(73) Proprietor: BTICINO S.P.A., 20154 Milano (IT)
(72) Inventor: Passera, Costantino, 20094 Corsico (Milano) (IT)
(74) Representative: Siniscalco, Fabio

(56) References cited:
- EP-A- 0 708 510
- GB-A- 2 230 901

## Description

The present invention relates to an adaptor for connecting, to electrical-energy distribution bars, an electrical device of the type which is mounted by being fitted on a rail and which has a clip contact.

In industrial electrical installations, use is made of electrical-energy distribution bars to which user appliances are connected with the interposition of electrical devices such as switches, knife switches, protection devices, etc. These devices are mostly of the standardized, modular type and are constructed in a manner such that they can be fitted on a supporting rail on which they are arranged side by side to form assemblies which can be made up according to the various requirements of use.

In order to couple these devices to the distribution bars, use is made of adaptors which have hooks for coupling to the bars and a rail for supporting the devices. If the device to be fitted on the adaptor has a rear clip contact, the adaptor has a contact terminal projecting from its front wall for engagement in the clip contact of the device. This terminal is connected, inside the body, to a rear terminal disposed in the region of one of the hooks in order to establish an electrical contact with one of the distribution bars.

Document EP-A-0 708 510 describes an adaptor for electrical installations which is in accordance with a preamble of claim 1.

Naturally, when an adaptor is fitted in position on the live distribution bars, its contact terminal is also live so that, if there is no device mounted on the adaptor, the contact terminal is uncovered and constitutes a danger to an operator who has to operate on the board to replace a device for maintenance works or for other operations.

The object of the present invention is to propose an adaptor which does not have the above-described disadvantage.

This object is achieved, according to the invention by virtue of the fact that the adaptor comprises a plurality of hooks on its rear wolf far coupling the adaptor to distribution bars, a sheath of insulating material slidable on the contact terminal, and resilient means which act on the sheath in order to hold the sheath in position around the contact terminal in the absence of forces acting on the sheath in opposition to the resilient means.

Clearly, with the adaptor according to the invention, the contact terminal is not accessible accidentally because it is covered by the insulating sheath which can be removed only intentionally, for example, when the rear of a device to be fitted on the adaptor pushes the sheath towards the interior of the body.

According to an advantageous embodiment of the invention, the adaptor comprises a resiliently loaded, removable stop means which interferes with the sheath to prevent it from sliding. This achieves even greater protection against accidental contact with the terminal since, in order to uncover the terminal, a further intentional operation is necessary to remove the stop means. Another embodiment of the invention provides for a release push-button with a cam which acts on the stop means. Only by pushing the push-button towards the interior of the body, for example, with the rear of an electrical device to be mounted on the adaptor, is it possible to de-activate the stop means and also to push the sheath into the body by means of the rear of the electrical device in order to uncover the terminal during its engagement in the clip contact of the device.

The invention will be explained further by the following detailed description of an embodiment thereof described by way of non-limiting example with reference to the appended drawings, in which:
Figure 1 shows, in section, an adaptor according to the invention mounted on four distribution bars, and shows the arrangement of the movable parts of the adaptor before an electrical switch is mounted thereon,
Figure 2 shows the adaptor of Figure 1 in section, and shows the arrangement of the movable parts of the adaptor after an electrical switch has been fitted thereon,
Figure 3 is a perspective view of the adaptor with one of the shells of which it is composed removed, showing the arrangement of the movable parts of the adaptor before an electrical switch is fitted thereon,
Figure 4 is a perspective view of a portion of the adaptor with one of the shells of which it is composed removed, showing the arrangement of the movable parts of the adaptor after an electrical switch has been fitted thereon, and
Figures 5 and 6 are details showing in section solely the movable parts of the adaptor in the relative positions before and after an electrical switch has been fitted on the adaptor, respectively.

The adaptor is constituted by a flat, box-like body with two relatively large sides and is constituted by two shells of insulating material welded together. The adaptor is shown in the drawings with one of the shells removed to show better its internal structure and its movable parts. The body, indicated 10, has a front wall which is shaped so as to form a double rail 12 for the support and engagement of an electrical device 14 which, in the embodiment shown is a switch, and a rear wall which is shaped so as to form a plurality of hollow hooks 16 for engaging and bearing on corresponding parallel distribution bars 18. In the embodiment shown, there are four hooks and four bars.

The body 10 houses a metal connector 20 constituted by a metal plate bent and shaped so as to form, at one of its ends, a terminal 22 which projects from the front of the body and, at the opposite end, a U-shaped member 24 disposed inside one of the hooks 16. The terminal 22 constitutes a blade contact for engagement in a clip contact which is not shown in the drawings but is accessible on the rear of the device 14, and the U-shaped member 24 constitutes an element for electrical and mechanical connection to a bar 18. In this embodiment, the connector 20 is intended for contact with the uppermost bar in the drawing but, naturally, it may be formed so as to contact any of the other bars 18.

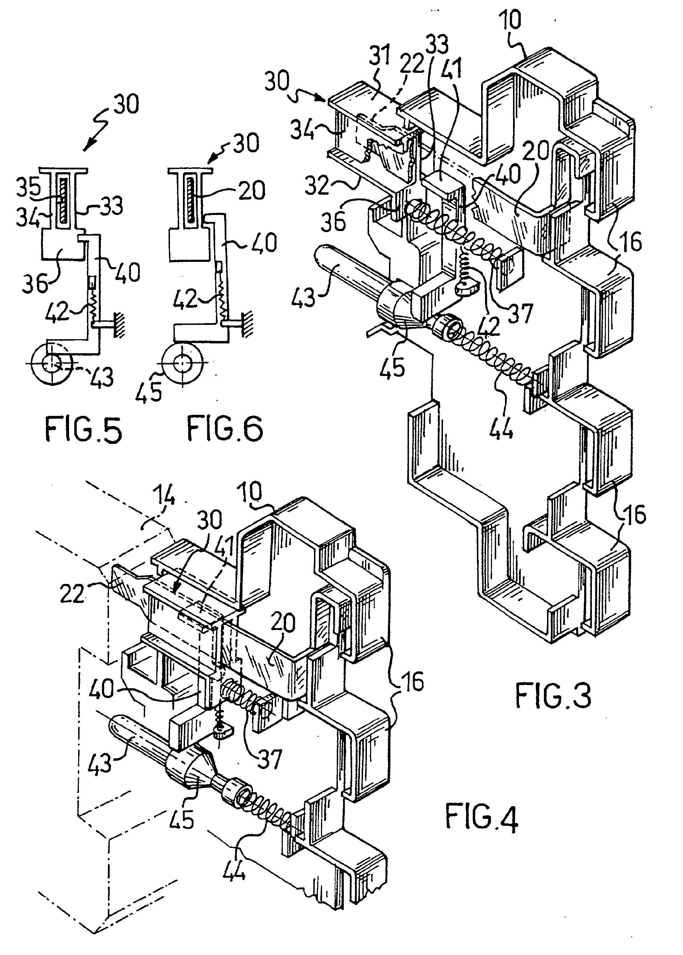

According to the invention, the adaptor comprises a sheath 30 of insulating material slidable on the contact terminal 22. This sheath 30 which, for example, is moulded from plastics material, has two opposed walls 31, 32 joined together by two transverse elements 33, 34, as can be seen in Figures 3 to 6, in particular. The ends of the opposed walls 31, 32 form respective guide rails for the sliding of the sheath in the body 10 and the two transverse elements 33, 34 together define a seat 35 which allows the sheath to slide freely on the contact terminal 22 and on the extension thereof inside the body. One of the opposed walls 31, 32 is connected, at one end of the sheath, to a right-angled tab 36. The sheath 30 is formed and fitted so as to slide on the connector 20 and to project from the body up to the point at which the tab 36 abuts the inside of the front wall of the body. It is held in this position by a compression spring 37 fixed by one of its ends to a support member integral with the body 10 and, by its opposite end, to a pin projecting from the abutment tab 36. In this position, the contact terminal 22 is completely covered by the sheath 30 and cannot therefore be touched accidentally by an operator.

In order further to improve safety, sliding of the sheath 30 towards the interior of the body 10 is prevented by a resiliently loaded latch formed by an arm 40 mounted for sliding in a direction perpendicular to the direction of sliding of the sheath 30. The arm 40 has, at one of its ends, a stop tooth 41 which interferes with the tab 36 of the sheath 30. An extension spring 42 fixed by one of its ends to the body 10 and by its opposite end to the arm 40 keeps the latch in the closure position.

A release push-button 43 is mounted for sliding axially through a hole in the front wall of the body of the adaptor and is resiliently loaded by a compression spring 44 so as to project from the body. A cam is associated with the push-button 43 and, in this embodiment, is constituted by an enlargement with a frustoconical surface 45 integral with the push-button. The opposite end of the arm 40 of the latch to that with the stop tooth 41 is in contact with the frustoconical surface at the point closest to the axis of the push-button when the push-button 43 and the sheath 30 are acted on solely by the respective springs.

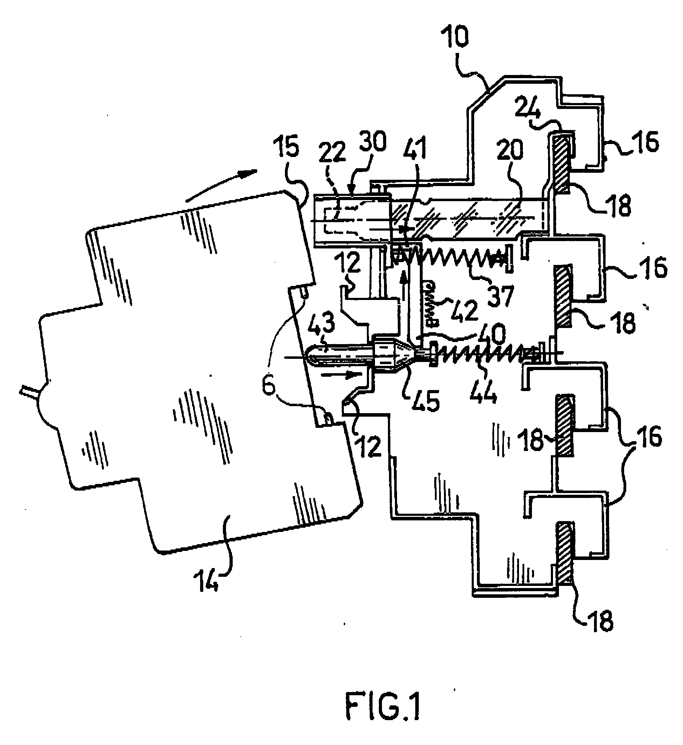

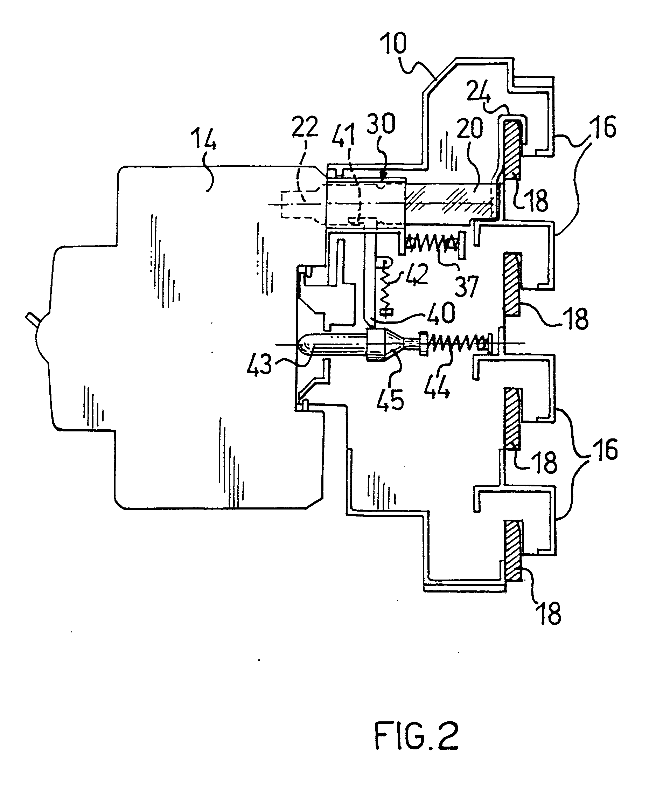

When an electrical device, such as the switch 14 shown in Figures 1, 2 and 4, is to be fitted on the adaptor, its end wall 15 acts first of all on the push-button 43, pushing the push-button towards the interior of the body 10, in opposition to the spring 44. The frustoconical surface 45 which moves with the push-button 43 acts on the arm 40, causing it to move transversely to the point at which the stop tooth 41, as it moves away from the tab 36 of the sheath, leaves the latter free to slide. The end wall 15 of the switch 14 now acts on the sheath 30, pushing the sheath towards the interior of the body in opposition to the spring 37. The contact terminal 22 can thus be engaged in the clip contact of the switch 14. Finally, the switch remains in position on the adaptor as a result of the engagement between two resilient teeth 6, which project from the end wall of the switch, and the rails 12 of the adaptor. When the switch 14 is removed from its seat, the sheath 30, the latch 40, and the push-button 43 return to the respective rest positions so that the contact terminal 22 is automatically covered again by the sheath 30 in the safety position.

## Claims

1. An adaptor for connecting, to electrical-energy distribution bars, an electrical device of the type which can be fitted on rails and which has a clip contact, the adaptor comprising a box-like body (10) which has a pair of rails (12) disposed on its front wall for the mounting of an electrical device (14), and a contact terminal (22) projecting from its front wall for engagement in the clip contact of the electrical device,
**characterized in that** it is provided with a plurality of hooks (16) on its rear wall for coupling the adaptor to distribution bars (18) and **in that** it further comprises a sheath (30) of insulating material slidable on the contact terminal (22), and resilient means (37) which act on the sheath (30) in order to hold the sheath in position around the contact terminal (22) in the absence of forces acting on the sheath in opposition to the resilient means.

2. An adaptor according to Claim 1, comprising a resiliently loaded, removable stop means (40, 41) which interferes with the sheath (30) to prevent it from sliding.

3. An adaptor according to Claim 2, comprising a release push-button (43) which is slidable axially through a hole in the front wall of the body (10), and is resiliently loaded so as to project from the body, and a cam (45) coupled to the push-button (43) in order to be operated thereby and to interact with the stop means (40, 41) in order to remove the stop means when the push-button (43) is slid towards the interior of the body.

4. An adaptor according to Claim 3, in which the cam comprises a frustoconical surface (45) and in which the stop means (40, 41) comprises an arm (40) of which one end interferes with the sheath (30) and the other end is in contact with the frustoconical surface (45) of the cam.

## Patentansprüche

1. Adapter zum Verbinden einer eingehen Vorrichtung mit einer Schiene für die Verteilung elektrischer Energie, wobei die Vorrichtung von dem Typ ist, der an Schienen angebracht werden kann und der einen Klemmkontakt anfweist, wobei der Adapter umfasst: ein behälterähnliches Gehäuse (10) mit einem Paar Schienen (12), die an seiner Vorderwand angeordnet sind zum Anbringen einer elektrischen Vorrichtung (14), und einen Kontaktanschluss (22), der von seiner Vorderwand vorsteht zum Eingriff mit dem Klemmkontakt der elektrichen Vorrichtung,
**dadurch gekennzeichnet, dass** an seiner Rückwand eine Mehrzahl von Haken (16) vorgesehen sind zum Koppeln des Adapters mit den Verteilerschienen (18) und dass er ferner eine auf dem Kontaktanschluss (22) verschiebbare Hülle (30) aus isolierendem Material umfasst und federnde Mittel (37), die auf die Hülle (30) wirken, um die Hülle in einer Position um das Kontaktendstück (22) herum zu halten, wenn auf die Hülle keine kräfte gegen die federnden Mittel wirken.

2. Adapter nach Anspruch 1, wobei er ein federnd vorgespanntes, lösbares Haltemittel (40, 41) umfasst, das störend auf die Hülle (30) einwirkt, um ihr Verschieben zu verhindern.

3. Adapter nach Anspruch 2, wobei er einen Freigabedruckknopft (43) umfasst, der durch eine Öffnung in der Vorderwand des Gehäuses (10) hindurch axial verschieblich ist und derart federnd vorgespannt ist, dass er vom Gehäuse vorsteht, und einen Nocken (45), der mit dem Druckknopf (43) gekoppelt ist, um durch diesen betätigt zu werden und mit dem Haltemittel (40, 41) wechselzuwirken, um das Haltemittel freizugeben, wenn der Druckknopf (43) zum inneren des Gehäuses verschoben wird.

4. Adapter nach Anspruch 3, bei dem der Nocken eine kegelstumpfartige Oberfläche (45) umfasst und bei dem das Haltemittel (40, 41) einen Arm (40) umfasst, von dem das eine Ende störend auf die Hülle (30) einwirkt und das andere Ende in Kontakt mit der kegelstumpfartigen Oberfläche (45) dem Nocken steht.

## Revendications

1. Adaptateur destine à connecter a des barres de distribution d'énergie électrique, en appareil électrique du type qui peut être monté sur des rails et qui présente un contact par clip, l'adaptateur comprenant un corps similaire à une boîte (10) qui présente une paire de rails (12) disposés sur sa paroi avant pour le montage d'un appareil électrique (14), et une borne de contact. (22) qui fait saillie de sa paroi avant pour une mise en prise avec le contact par clip du dispositif électrique,
**caractérisé en ce qu'**il est doté d'une pluralité de crochets (16) sur sa paroi arrière de manière à relier l'adaptateur à des barres de distribution (18) et **en ce qu'**il comprend en outre une gaine (30) de matériau isolant qui peut être glissée sur la borne de contact (22), et des moyens élastiques (37) qui agissent sur la gaine (30) de manière à retenir la gaine en position autour de la borne de contact (22) en l'absence de forces qui agissent sur la gaine en opposition aux moyens élastiques.

2. Adaptateur selon la revendication 1, comprenant des moyens d'arrêt amovibles chargés de manière élastique (40, 41) qui interfèrent avec la gaine (30) de manière à l'empécher de glisser.

3. Adaptateur selon la revendication 2, comprenant un bouton-poussoir de libération (43) qui peut coulisser de manière axiale à travers un trou situe dans la paroi avant de corps (10), et qui est chargé de manière élastique afin de faire saillie du corps, et une came (43) reliée au bouton-poussoir (43) afin d'être actionnée de ce fait et d'interagir avec les moyens d'arrêt (40, 41) de manière à retirer les moyens d'arrêt lorsque le bouton-poussoir (43) coulisse vers l'intérieur du corps.

4. Adaptateur selon la revendication 3, dans lequel la came comprend une surface, tronconique (45) et dans lequel les moyens d'arrêt (40, 41) comprennent un bras (40) dont une extrémité interfère avec la gaine (30) et l'autre extrémité est en contact avec la surface tronconique (45) de la came.
